**Europäisches Patentamt**

**European Patent Office**

**Office européen des brevets**

(19)

(11) Numéro de publication : **0 451 754 B1**

(12)

# FASCICULE DE BREVET EUROPEEN

(45) Date de publication du fascicule du brevet :
**29.03.95 Bulletin 95/13**

(51) Int. Cl.⁶ : **H04L 25/03**

(21) Numéro de dépôt : **91105515.0**

(22) Date de dépôt : **08.04.91**

(54) **Egaliseur autoadaptatif numérique.**

(30) Priorité : **10.04.90 FR 9004589**

(43) Date de publication de la demande :
**16.10.91 Bulletin 91/42**

(45) Mention de la délivrance du brevet :
**29.03.95 Bulletin 95/13**

(84) Etats contractants désignés :
**AT BE CH DE DK ES FR GB IT LI NL SE**

(56) Documents cités :
**EP-A- 0 022 558**
**US-A- 4 186 384**

(73) Titulaire : **ALCATEL BUSINESS SYSTEMS**
**12, rue de la Baume**
**F-75008 Paris (FR)**

(72) Inventeur : **Brunner, Frédéric**
**11, rue Erckmann-Chatrian**
**F-67400 Illkirch (FR)**

(74) Mandataire : **Weinmiller, Jürgen et al**
**Lennéstrasse 9**
**Postfach 24**
**D-82336 Feldafing (DE)**

## Description

L'invention concerne un égaliseur autoadaptatif numérique destiné à corriger les distorsions introduites par un canal de transmission sur les signaux numériques qu'il transmet, lorsque le débit est élevé, par exemple de l'ordre de quelques mégabits/seconde.

Un tel égaliseur autoadaptatif, qui peut être exploité pour réaliser une annulation d'écho avec divers types de liaisons de transmission de différentes longueurs, est par exemple associé à une liaison de longueur relativement courte, inférieure au kilomètre, comportant une paire de fils torsadés qui dessert une installation privée de télécommunication.

De manière connue, les possibilités de transmission d'informations, sous forme numérique et à haut débit, par une liaison dépendent des caractéristiques de réponse impulsionnelle de cette liaison, elles sont susceptibles d'être fortement limitées par l'apparition d'interférences intersymboles dont les effets perturbateurs croissent avec la longueur et avec le débit de la liaison considérée.

Pour pallier ces inconvénients, des égaliseurs sont associés aux liaisons de transmission à hautes performances, ces égaliseurs sont préférablement choisis autoadaptatifs, lorsque la connaissance des caractéristiques de transmission des liaisons concernées est susceptible d'être imprécise.

Il est connu de réaliser, à cet effet des égaliseurs autoadaptatifs numériques qui traitent les signaux numériques dégradés, reçus d'une liaison de transmission, au moyen de convertisseurs analogiquesnumériques et qui réalisent un filtrage numérique sur les signaux numériques issus des convertisseurs. Ce filtrage implique notamment la réalisation de multiplications numériques pour assurer la convolution et la mise à jour des coefficients des filtres.

Or les convertisseurs analogiques-numériques et les multiplieurs numériques connus sont des sousensembles qui exigent une surface de silicium relativement importante, ce qui est pénalisant lorsqu'ils sont prévus dans des circuits intégrés. Ils sont donc assez coûteux et ne conviennent pas pour des liaisons numériques de transmission d'usage général destinées par exemple à desservir des terminaux numériques dans une installation de type commutateur multiservice du domaine des télécommunications privées, où le prix de revient est un facteur important.

De plus le traitement des signaux reçus y est relativement lent et ne convient pas pour les débits envisagés ici.

On connaît aussi, par le document US-A-4 186 348, un égaliseur adaptatif numérique qui reçoit le signal d'une liaison de transmission analogique après conversion analogique/numérique et qui en déduit un bit de signe de l'erreur. Ce bit est ensuite converti en analogique et intégré pour servir de signal de correction pour la tension de base du signal arrivant sur la liaison.

Contrairement à cela, l'invention propose un égaliseur autoadaptatif qui est destiné à corriger les distorsions introduites par une liaison de transmission sur un signal numérique en code à "n" niveaux dont elle assure la transmission.

L'égaliseur selon l'invention est défini par la revendication 1. En ce qui concerne des caractéristiques d'un exemple préféré de réalisation d'un tel égaliseur, référence est faite aux revendications dépendantes.

L'invention, ses caractéristiques et ses avantages sont précisés dans la description qui suit, en liaison avec les figures répertoriées ci-dessous.

La figure 1 présente un schéma de principe d'un égaliseur autoadaptatif connu.

La figure 2 présente un schéma de principe d'un égaliseur autoadaptatif selon l'invention.

La figure 3 présente un schéma détaillé de l'égaliseur présenté en figure 2.

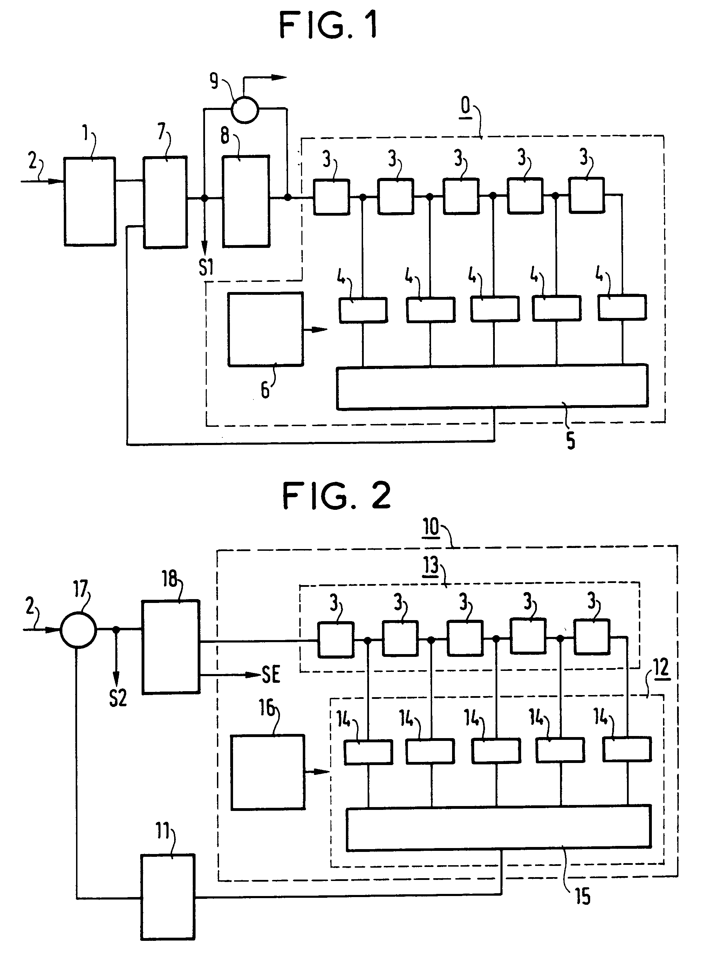

L'égaliseur autoadaptatif, de type classique, présenté sur la figure 1 comporte essentiellement un convertisseur analogique/numérique 1 recevant les signaux numériques transmis par une liaison de transmission 2, afin de reconstituer des signaux numériques exploitables par les circuits situés en aval.

La liaison 2 relie par exemple un terminal téléphonique à un coupleur du commutateur multiservice qui le dessert.

Le convertisseur 1 doit être très rapide pour permettre la reconstitution des symboles d'un signal reçu et il doit par conséquent travailler à une fréquence au moins égale à la fréquence de transmission de ces symboles, il est généralement composé de comparateurs en parallèle dont le nombre est fonction de la résolution désirée, ceci se traduit donc par l'occupation d'une surface support relativement importante dans le cas d'un circuit intégré VLSI.

Un filtre numérique 0 est positionné en aval du convertisseur 1, il est par exemple du type comportant un ensemble de bascules 3, ou de registres, disposées en série et formant une mémoire tampon, ainsi qu'une logique corrective constituée à l'aide de multiplieurs 4 associés à un sommateur 5 et à un dispositif d'actualisation 6.

La sortie de chaque bascule 3 est reliée à un multiplieur 4, individuel, recevant aussi un coefficient multiplicateur provenant du dispositif d'actualisation 6. Les signaux obtenus des multiplieurs 4 sont transmis en parallèle à un premier sommateur 5 qui fournit le signal de sortie du filtre, ce dernier étant éventuellement rebouclé, si le filtre est de type à réponse impulsionnelle infinie.

Le rebouclage s'effectue par l'intermédiaire d'un second sommateur 7, de type numérique, servant de dispositif correcteur, qui est positionné entre le convertisseur 1 et la première de série des bascules 3.

Ce second sommateur 7 permet de corriger les signaux reçus avant leur transmission à une sortie S1 pour exploitation et au filtre pour interprétation.

Un dispositif de quantification 8 est placé entre la sortie du second sommateur 7 et la première de série des bascules 3, il permet d'introduire une non-linéarité dans les signaux transmis à cette série de registres 3.

Un soustracteur 9 connecté d'une part à l'entrée et d'autre part à la sortie du dispositif de quantification 8 permet de connaître l'erreur introduite.

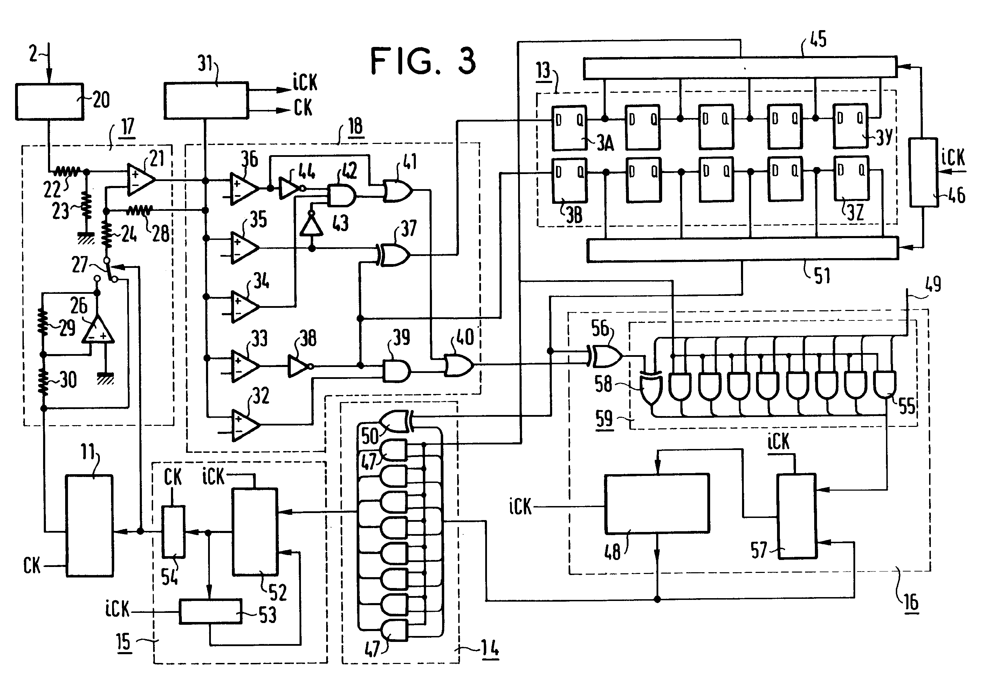

Comme indiqué plus haut, la nécessité de disposer de multiplieurs rapides implique que ceux-ci aient une structure de type parallèle et que par conséquent une surface étendue de circuit VLSI leur soit réservée, ce que l'invention évite, ainsi qu'indiqué ci-dessous et présenté sur les figures 2 et 3.

L'entrée de l'égaliseur auto-adaptatif selon l'invention qui est présenté en figure 2, est constituée par un dispositif correcteur réalisé sous la forme d'un soustracteur analogique 17, par exemple à l'aide d'amplificateurs opérationnels et de résistances.

Ce soustracteur 17 se connecte en sortie de la liaison de transmission 2, éventuellement via un circuit de correction automatique de gain, classique, non représenté ici.

De par sa constitution, ce soustracteur 17 est rapide et peu encombrant, il reçoit les signaux numériques transmis par la liaison 2 sur une première de ses entrées, sa sortie attaque une entrée d'un dispositif de quantification 18, constitué à l'aide de comparateurs, qui reçoit également par d'autres entrées des signaux de référence correspondants aux différents niveaux théoriques possibles des signaux numériques attendus, par exemple trois, quatre ou cinq niveaux.

La mise en oeuvre dans le cas de signaux numériques codés sur trois niveaux est avantageusement simple.

Dans l'exemple de réalisation ici envisagé, le code de transmission des signaux reçus de la liaison de transmission 2 est par exemple un code AMI et les niveaux théoriques attendus sont donc +1, -1 et 0.

Une approximation est réalisée sur les signaux reçus de manière à faire apparaître à la sortie du dispositif de quantification 18 deux signaux correspondant respectivement à la valeur absolue de l'amplitude et au signe du signal reçu, amplitude et signe qui se codent chacun à l'aide d'un seul bit dans le cas d'un symbole du signal ternaire envisagé. L'adaptation à un code comportant un plus grand nombre de niveaux est pratiquement immédiate pour les codes à faible nombre de niveaux usuellement mis en oeuvre.

Une information indiquant le sens de l'erreur d'approximation qui affecte le signal de sortie, considéré à ici trois niveaux, du dispositif de quantification 18 est aussi fournie par une sortie SE de ce dernier.

Un filtre numérique 10 est relié à la première sortie du dispositif de quantification 18, il comporte un ensemble de bascules 3, de type D, formant une mémoire tampon 13 pour les données fournies par le dispositif de quantification pour "i" transcodages binaires successifs de symbole du signal reçu.

Le filtre numérique 10 comporte aussi une logique corrective 12, celle-ci est notamment composée d'un ou de plusieurs modules logiques 14 correspondants chacun à un dispositif multiplieur binaire, ainsi que d'un sommateur 15, elle est associée à un dispositif d'actualisation 16.

Les modules 14 sont individuellement reliés chacun en sortie d'une bascule 3.

Le sommateur 15 reçoit en parallèle les signaux de sortie provenant simultanément des modules 14, le signal somme qu'il fournit sous forme numérique, est converti sous forme analogique par un convertisseur 11 qui est placé en sortie du filtre 10.

Le soustracteur analogique 17 qui reçoit les signaux numériques dégradés parvenant de la liaison de transmission 2 sur une première entrée reçoit aussi, en tant que signal de correction, le signal fourni par le convertisseur 11, de type numérique-analogique; il fournit lui-même des signaux corrigés au niveau d'une sortie S2.

Chaque module 14 se substitue à un multiplieur 4 de l'art antérieur, puisque dans les conditions choisies, de simples additions ou soustractions se substituent aux multiplications habituellement effectuées.

Les coefficients du filtre sont individuellement fournis par le dispositif d'actualisation 16 à la logique d'exploitation 12 afin d'y être exploités.

Les résultats donnés sous forme numérique par cette dernière sont regroupés au niveau du sommateur 15 avant d'être mis sous forme analogique par le convertisseur 11.

Ce dernier est par exemple réalisé à l'aide de résistances selon un agencement classique permettant d'obtenir une grande rapidité à un faible coût. Le signal analogique obtenu est appliqué au soustracteur 17 et permet de corriger les signaux numériques dégradés qui sont reçus par ce soustracteur en provenance de la liaison de transmission 2.

La figure 3 présente un exemple de réalisation d'un égaliseur autoadaptatif selon l'invention où, notamment, sont obtenus une réduction du nombre de composants au niveau du filtre et par conséquent une réduction en surface, dans le cas d'un circuit VLSI.

L'égaliseur autoadaptatif proposé qui est de type récursif à décision dans la boucle, n'est pas linéaire et n'amplifie donc pas le bruit.

Comme indiqué ci-dessus, cet égaliseur autoadaptatif reçoit les signaux numériques dégradés provenant de la liaison de transmission 2 par l'intermédiaire d'un classique circuit de correction automatique de gain, ici référencé 20, qui amène par exemple le niveau des signaux reçus entre zéro et cinq volts.

Ce circuit de correction de gain 20 attaque une première entrée d'un soustracteur analogique 17 dont une seconde entrée reçoit le signal de correction fourni par un convertisseur 11, de type numérique-analogique, comme indiqué en liaison avec la figure 2.

Le soustracteur 17 est réalisé par exemple autour d'un amplificateur opérationnel 21 dont l'entrée non-inverseuse est reliée au point commun d'un pont diviseur à résistances 22,23 en série entre la masse et la sortie du circuit de correction de gain 20. L'entrée inverseuse de l'amplificateur opérationnel 21 reçoit le signal de correction qui lui est appliqué via une résistance 24, soit directement par la sortie du convertisseur 11, soit au travers d'un amplificateur inverseur 26, le choix de l'une ou l'autre des voies s'effectuant, suivant le sens de la correction à apporter et par l'intermédiaire d'un commutateur 27, commandé d'une manière qui sera évoquée plus loin.

Un signal égalisé apparaît en sortie de l'amplificateur opérationnel 21, il est simultanément appliqué en contre-réaction à l'entrée inverseuse de cet amplificateur opérationnel 21, via une résistance 28, à l'entrée d'une boucle à verrouillage de phase 31 pour la récupération de l'horloge contenue dans les signaux reçus de la liaison de transmission 2 et à l'entrée du dispositif de quantification 18.

Ce dernier comporte un ensemble d'ici cinq comparateurs 32 à 36, réalisés à l'aide d'autant d'amplificateurs opérationnels identiquement reliés à la sortie de l'amplificateur opérationnel 21, chacun par son entrée non inverseuse respective, et individuellement reliés chacun à un potentiel de référence positif différent par son entrée inverseuse, les cinq potentiels étant ici répartis de manière égale à partir de zéro jusqu'à cinq volts.

Le code de transmission des signaux reçus de la liaison de transmission 2 étant supposé à trois niveaux correspondants respectivement aux valeurs ternaires -1, 0 et +1, il suffit d'un premier agencement associant deux comparateurs, ici les comparateurs 33 et 35, reliés chacun par sa sortie à une entrée différente d'une porte 37, de type OU exclusif, et un inverseur 38, inséré entre le comparateur 33 et la porte 37, pour quantifier en amplitude les signaux apparaissant en sortie de l'amplificateur opérationnel 21, les potentiels de référence des comparateurs 33 et 35 étant respectivement supposés l'un de 1,25 volt et l'autre de 3,75 volt.

La quantification en signe pour les valeurs ternaires +1 et -1 s'effectue simplement en tenant compte du signal binaire présent en sortie de l'inverseur 38.

Un agencement complémentaire permet d'établir le signe de l'erreur introduite par la quantification en amplitude définie ci-dessus.

Cet agencement complémentaire associe les trois comparateurs 32,34 et 36 mentionnés ci-dessus, dont les potentiels de référence respectifs sont ici de 0, 2,5 et 5 volts, une pluralité de portes 39 à 42 et deux inverseurs 43,44 aux amplificateurs 33 , 35 et à l'inverseur 38 du premier agencement.

La porte 40, de type OR, fournit ici une indication binaire de valeur un, dite d'erreur positive, lorsque le signal en sortie de l'amplificateur opérationnel 21 est supérieur au potentiel de référence associé au signal de valeur ternaire qui a été quantifié.

La porte 40 fournit une indication binaire de valeur zéro, dite d'erreur négative, lorsque le signal en sortie de l'amplificateur opérationnel 21 est inférieur au potentiel de référence associé au signal de valeur ternaire qui a été quantifié.

Dans le premier cas, la porte 40 a ses deux entrées au niveau binaire 0 sous l'action respective de la porte 39, de type ET et de la porte 41, de type OU, la porte 39 étant reliée par une première entrée à la sortie du comparateur 32 correspondant au seuil de valeur ternaire -1, c'est-à-dire 0 volt, et par une seconde entrée à la sortie du comparateur 33, via l'inverseur 38.

Ce comparateur 33 indique la position du signal reçu par rapport au seuil médian de 1,25 volts qui permet la prise en compte d'un signal reçu avec une valeur ternaire -1 ou 0, suivant que ce signal est compris entre 0 et 1,25 volts ou entre 1,25 et 2,5 volts.

A cet effet, la porte 40 qui est reliée en sortie des portes 39 et 41 est raccordée par cette dernière, d'une part en sortie du comparateur 36 contrôlant la position du signal reçu par rapport au seuil de 5 volts correspondant à la valeur ternaire 1, d'autre part en sortie d'une porte 42, de type ET. Cette dernière a trois entrées respectivement reliées en sortie du comparateur 34, en sortie du comparateur 35, via un inverseur 43, et en sortie du comparateur 36, via un autre inverseur 44.

Les signaux apparaissant en sortie de la porte 37 et de l'inverseur 38, qui traduisent respectivement la valeur absolue de l'amplitude du signal reçu telle que rétablie et son signe, sont appliqués à l'ensemble 13 regroupant les bascules 3 de l'égaliseur autoadaptatif selon l'invention.

Dans le cas du code de transmission ternaire envisagé ci-dessus, il est nécessaire de disposer de deux bits pour représenter les trois valeurs ternaires -1, 0, +1 possibles pour un symbole.

Ceci conduit donc à disposer de deux bascules 3 pour mémoriser temporairement les deux bits de transcodage, l'un dit d'amplitude et l'autre dit de signe, correspondants à chaque valeur ternaire et donc d'autant de fois deux bascules 3 qu'il y a de valeurs ternaires prises simultanément en compte pour la correction autoadaptative choisie, un nombre "i" égal à cinq valeurs ternaires successives du signal reçu étant choisi dans l'exemple proposé.

La mémoire tampon 13 comporte un nombre "i" d'ici cinq étages et elle est composée de deux sous-ensembles comportant chacun une série de cinq bascules 3.

Un premier de ces sous-ensembles est relié en sortie de la porte 37 et reçoit sur une entrée d'une bascule 3A située en amont de sa série, les bits d'amplitude de symbole successivement définis à partir du signal reçu.

Le second de ces sous-ensembles est relié en sortie de l'inverseur 38 et reçoit, sur une entrée d'une bascule 3B située en amont de sa série, les bits successifs qui correspondent au signe des dits symboles.

Dans une forme préférée de réalisation, toutes les bascules de la mémoire tampon 13 qui sont de constitution identique ont leurs entrées d'horloge qui sont commandées par la boucle à verrouillage de phase 31, celle-ci leur fournissant des signaux d'horloge bit CK à partir du signal reçu.

Cinq paires de bits de transcodage correspondant à cinq symboles successifs sont donc simultanément conservées en mémoire tampon 13, au moyen des deux sous-ensembles de bascules de l'égaliseur.

La fonction d'autoadaptation de l'égaliseur selon l'invention est obtenu en appliquant un coefficient adaptateur individuel au signal apparaissant en sortie de chacun des cinq étages, chaque coefficient étant susceptible de varier en fonction des variations affectant les symboles du signal reçu.

L'algorithme de mise à jour des coefficients est ici du type dit algorithme du signe ou du gradient simplifié défini par la formule:

$$C(n + 1) = C(n) + alpha.sgn(Er).Yq(nT - iT)$$

ou:
- C(n+1) et C(n) sont les valeurs des coefficients aux instants successifs n+1 et n, chacun de ces coefficients étant exprimé au moyen de "q" bits dont un de signe, "q" étant ici égal à neuf;
- alpha est une valeur fixée déterminant la vitesse de convergence de l'égaliseur;
- sgn(Er) correspond au signe de l'erreur affectant une valeur ternaire transcodée, tel que fourni initialement par l'inverseur 38;
- Yq(nT-iT) correspond à la quantification de la valeur ternaire transcodée envisagée ci-dessus telle que fournie par la porte 37 au temps précédent de "i" temps d'horloge CK le temps "n".

A cet effet, les "i" bascules 3A à 3Y du premier sous-ensemble ont leur sortie respectives reliées à autant d'entrées individuelles d'un multiplexeur 45 adressé par un compteur 46 recevant un signal d'horloge iCK produit par la boucle à verrouillage de phase 31 à partir du signal d'horloge CK, le signal iCK ayant une fréquence qui est "i" fois celle du signal CK.

Le multiplexeur 45 est relié à la logique corrective 12 qui comporte ici un seul module logique 14 qui est exploité "i" fois consécutivement pour la fourniture de chaque signal de correction de symbole. Ce module 14 est composé de "q-1" portes 47, de type ET et d'une porte 50, de type OU exclusif, un sommateur 15 lui est fonctionnellement associé.

Le signal de sortie du multiplexeur 45 attaque une première entrée de chacune des portes 47, parallèles.

L'autre entrée de chaque porte 47 est reliée à une des différentes sorties d'un registre 48, du type premier entré-premier sorti, à "i" étages et "q" sorties parallèles.

Le registre 48 est apte à contenir, dans chacun de ses "i" étages, les "q-1" valeurs binaires définissant un coefficient à un instant donné, ainsi qu'une valeur supplémentaire correspondant au signe dont doit être affecté ce coefficient.

Ces valeurs sont initialement fournies au registre 48 par un moyen extérieur, par exemple par un processeur externe, via une liaison 49.

La porte 50 est montée parallèle aux portes 47, elle reçoit sur une première entrée le signal de signe fourni par le registre 48 et sur une seconde entrée celui que fournit un multiplexeur 51 relié aux sorties des bascules 3B à 3Z du second sous-ensemble dans lequel s'enregistrent temporairement les bits caractéristiques de signe obtenus du dispositif de quantification 18, par transcodage, pour des symboles successifs du signal reçu.

Ce multiplexeur 51 et le multiplexeur 45 sont adressés par le compteur 46 de manière à simultanément fournir, a chaque temps d'horloge iCK, le bit de valeur absolue d'amplitude et le bit de signe obtenus lors du transcodage binaire d'un symbole.

Les "q" bits simultanément fournis par les sorties des "q-1" portes 47 et par la porte 50 sont appliqués à un premier groupe d'entrées correspondantes d'un circuit additionneur 52 du sommateur 15 qui incorpore aussi deux registres de verrouillage 53 et 54.

Un second groupe de "q" entrées de l'unité 52 se reboucle, via le registre de verrouillage 53, sur ses "q" sorties pour assurer l'addition de toute combinaison de bits apparaissant au niveau du premier groupe d'entrées de cette unité 52 avec la combinaison obtenue en sortie, lors de l'addition précédente.

L'unité 52 et le registre 53 sont contrôlés par le signal d'horloge iCK, alors que le registre de verrouillage 54, dont les entrées sont en parallèle avec celles du registre 53, est contrôlé par le signal d'horloge CK.

Ceci permet d'effectuer successivement les "i" additions nécessaires pour l'obtention d'un signal de correction de symbole, avec une période 1/CK et au moyen d'un même agencement très simple au lieu d'utiliser les "i" multiplieurs classiques, tant que la fréquence CK extraite des signaux reçus et le nombre "i" d'étages reste compatible avec les fréquences admises par les composants constituant l'égaliseur.

Le résultat obtenu en sortie de l'unité 52 au bout de "i" additions effectuées par l'unité 52 en liaison avec le registre 53 au rythme d'horloge iCK est alors transmis à par le registre 54 actionné au rythme d'horloge CK.

Ce registre fournit un bit de signe pour la commande du commutateur 27 que contient le soustracteur analogique 17.

A chaque temps d'horloge CK, le convertisseur 11 reçoit simultanément "q-1" bits provenant du registre 54 en sortie duquel il est relié avec le commutateur 27 et il produit un signal, se présentant sous la forme d'une tension électrique, qui est appliqué pour action au soustracteur 17, au niveau d'une entrée inverseuse de l'amplificateur opérationnel 26 et via une résistance 30.

Une mise à jour permanente des coefficients de l'égaliseur est assurée par l'intermédiaire d'un dispositif d'actualisation 16 apte à recevoir les "q" bits de définition d'un coefficient initialement fourni l'égaliseur, via la liaison 49, et les deux bits de sortie respectivement fournis par la porte 40 et par le multiplexeur 51.

Les "q-1" bits correspondant à la valeur absolue d'un coefficient et le bit relatif au signe affecté à ce coefficient sont individuellement transmis par la liaison 49 à un module logique 59 identique au module 14 et par conséquent composé de "q-1" portes 55, de type ET, reliées chacune par une première entrée à un fil de individuel de la liaison 49, ces portes recevant en parallèle, sur une seconde entrée, le bit d'amplitude fourni par le multiplexeur 45 à chaque temps d'horloge iCK.

Le bit de signe émanant de la liaison 49 est transmis à une entrée d'une porte 58, de type OU exclusif, dont une seconde entrée est reliée en sortie d'une autre porte 56, également de type OU exclusif, qui reçoit d'une part le bit de signe fourni par la porte 40 pour chaque transcodage effectué à parti d'un symbole arrivant, d'autre part le bit de signe fourni par le multiplexeur 51. Les "q" bits fournis à chaque temps d'horloge iCK par les portes 55 et par la porte 58 sont appliqués à un premier groupe d'entrées d'un sommateur 57 dont les "q" sorties sont reliées aux entrées du registre 48 dont les "q" sorties sont d'une part, comme on l'a vu, reliées aux entrées des portes 47 et 50 du module 14, et d'autre part rebouclées sur un second groupe d'entrées, de manière à additionner les "q" bits reçus sur le premier groupe d'entrées à chaque temps d'horloge iCK avec les bits obtenus en sortie du sommateur 57 au temps d'horloge iCK précédent.

Le dispositif d'actualisation 16 reçoit un bit relatif au signe de l'erreur affectant tout symbole transcodé par le dispositif quantificateur 18, au rythme d'horloge CK, et modifie le sens de la correction à effectuer en modifiant le bit de signe fourni par ce dispositif d'actualisation au sommateur 57, si besoin est.

L'addition des "q" bits simultanément fournis par le dispositif d'actualisation 16 avec ceux présents en sortie du registre 48 qui s'effectue au rythme d'horloge iCK, permet d'actualiser successivement les "i" valeurs de coefficient, de "q" bits chacune, qui sont mémorisées dans le registre 48 et qui sont individuellement associées chacune à l'un des étages de la mémoire tampon 13.

Le registre 48 fournit les "q" bits d'un coefficient au rythme de l'horloge iCK au module 14 de l'égaliseur de telle sorte que chacune des "i" additions effectuée par le circuit additionneur 52 puisse prendre en compte le calcul obtenu à partir d'une combinaison de deux bits de transcodage correspondants à un symbole et d'un des "i" coefficients actualisés correspondant.

## Revendications

1. Egaliseur autoadaptatif numérique, destiné à corriger les distorsions introduites par une liaison de transmission (2) sur un signal numérique, transmis en code à au moins trois niveaux au rythme d'une horloge de fréquence "CK", ledit égaliseur étant relié en sortie de liaison par un dispositif correcteur (17) recevant le signal transmis et un signal de correction provenant d'un filtre (10), le signal de sortie du dispositif correcteur étant transcodé binairement par un dispositif de quantification (18), avant d'être traité par le filtre, ce dernier tenant compte des transcodages binaires qui ont été effectués pour "i" symboles successifs du signal reçus au rythme "CK" pour établir, en fonction d'au moins un coefficient adaptateur initial, le signal de correction à appliquer au symbole arrivant via la liaison, ledit égaliseur étant caractérisé en ce qu'il comporte un dispositif correcteur constitué par un soustracteur analogique, ce dernier recevant le signal de correction de symbole d'un convertisseur numérique-analogique (11), placé en sortie du filtre (10) qui contient une mémoire tampon (13) de transcodages binaires et une logique corrective (12) constituée à l'aide de portes logiques binaires (47,50) associant les bits de transcodage contenus dans la mémoire tampon pour "i" symboles successifs du signal reçu avec "i.q" bits correspondant à "i" coefficients adaptateurs obtenus l'un de l'autre, à partir d'un coefficient initial, par un dispositif d'actualisation (16) en fonction d'un résultat de constatation d'erreur fourni sous forme binaire pour chaque symbole successif par le dispositif de quantification.

2. Egaliseur autoadaptatif numérique, selon la revendication 1, caractérisé en ce que la mémoire tampon (13) comporte au moins deux sousensembles parallèles de bascules (3) en série pour mémoriser dans un sous-ensemble "i" bits caractéristiques de la valeur absolue de l'amplitude des symboles du signal reçu qui sont obtenus du dispositif de quantification (18) pour "i" périodes successives d'horloge "CK", pendant que l'autre sous-ensemble mémorise "i" bits caractéristiques du signe simultanément fournis par le dispositif de quantification pour les mêmes symboles.

3. Egaliseur autoadaptatif numérique, selon la revendication 2, caractérisé en ce que la sortie de chacune des "i" bascules (3) de chaque sous-ensemble de mémoire tampon (13) est reliée à une entrée d'un multiplexeur (45 ou 51) affecté à ce sous-ensemble et commandé par un compteur (46), commun aux deux multiplexeurs, qui active simultanément les sorties de bascules de même rang dans les deux sous-ensembles à la fréquence "iCK" correspondant au multiple "i" de la fréquence "CK" du signal reçu.

4. Egaliseur autoadaptatif numérique, selon la revendication 2, caractérisé en ce que la logique corrective (12) comporte au moins un module logique (14) composé en premier lieu d'une porte (50), de type OU exclusif, reliée par une première entrée à une sortie du sous-ensemble mémorisant les bits de signe et par une seconde entrée à une sortie de bit de signe comportée par le dispositif d'actualisation (16) et en second lieu de "q-1" portes (47), de type ET, reliées en commun par une entrée à une sortie du sous-ensemble mémorisant les bits d'amplitude et individuellement à "q-1" sorties de bits de coefficient du dispositif d'actualisation qui fournit simultanément "q" bits par coefficient, toutes ces portes (47, 50) attaquant en parallèle le convertisseur (11), via un sommateur (15), pour produire un signal de correction de symbole au dispositif soustracteur (17) à chaque période d'horloge "CK".

5. Egaliseur autoadaptatif numérique, selon les revendications 3 et 4, caractérisé en ce que la logique corrective (12) comporte un seul module logique (14) composé en premier lieu d'une porte (50), de type OU exclusif, reliée par une première entrée à une sortie du multiplexeur (45), dit premier, relié au sous-ensemble mémorisant les bits de signe et par une seconde entrée à une sortie de bit de signe comportée par le dispositif d'actualisation (16) et en second lieu de "q-1" portes (47), de type ET, reliées en commun par une entrée à la sortie du premier multiplexeur (45) relié au sous-ensemble mémorisant les bits d'amplitude et individuellement à "q-1" sorties de bits de coefficient du dispositif d'actualisation qui fournit simultanément "q" bits par coefficient, toutes les portes (47, 50) attaquant en parallèle le convertisseur (11), via un sommateur (15), pour fournir un signal de correction de symbole au dispositif soustracteur (17) à chaque période d'horloge "CK", un circuit additionneur (52) du sommateur (15) combinant les "q" bits simultanément fournis par les portes (47, 50) avec les combinaisons de "q" bits précédemment fournies par ces mêmes portes pendant "i" cycles successifs pour chaque signal de correction de symbole, deux registres de verrouillage (53, 54) respectivement commandés en lecture au rythme d'une horloge de fréquence "i.CK" et de l'horloge de fréquence "CK", étant insérés entre les "q" sorties du circuit additionneur et d'une part "q" autres entrées de ce circuit pour le premier registre (53), d'autre part les "q" entrées du convertisseur (11) pour le second registre (54).

6. Egaliseur autoadaptatif numérique, selon la revendication 5, caractérisé en ce que le dispositif d'actualisation (16) comporte un registre (48), du type premier entré-premier sorti, à "i" étages et "q" sorties parallèles reliées d'une part aux entrées du module logique (14) de le logique corrective, d'autre part à un groupe d'entrées d'un sommateur (57) recevant sur un autre groupe d'entrées "q" bits de coefficient fournis par un module logique (59) qui est identique au module logique (14) de la logique corrective et qui reçoit les "q" bits de définition d'un coefficient initial sur "q-1" portes (55), de type ET, et sur une porte (58), de type OU exclusif, cette dernière étant aussi reliée à la sortie d'une autre porte (56), de même type, qui reçoit d'une part le bit de signe fourni par le dispositif de quantification (18) pour chaque transcodage effectué à partir d'un symbole arrivant, d'autre part le bit de signe fourni par le multiplexeur (51), dit second, à chaque temps d'horloge "iCK", le premier multiplexeur (45) fournissant simultanément, à chaque temps d'horloge "iCK", un bit d'amplitude aux "q-1" portes, de type ET.

**Patentansprüche**

1. Selbstanpassender digitaler Entzerrer zur Korrektur der Verzerrungen eines in einem Kode mit mindestens drei Pegeln im Rhythmus eines Takts CK über eine Übertragungsstrecke übertragenen Signals, wobei der Entzerrer an den Ausgang der Strecke über eine Korrekturvorrichtung (17) angeschlossen ist, die das übertragene Signal und ein Korrektursignal aus einem Filter (10) empfängt, wobei das Ausgangssignal der Korrekturvorrichtung durch eine Quantifiziervorrichtung (18) binär transkodiert wird, ehe es vom Filter verarbeitet wird, wobei das Filter die binären Transkodierungen berücksichtigt, die für i im Takt CK aufeinanderfolgend empfangene Signalsymbole durchgeführt wurden, um abhängig von mindestens einem ursprünglichen Anpassungskoeffizienten das Korrektursignal zu ermitteln, das an das über die Strecke ankommende Symbol angelegt werden soll, dadurch gekennzeichnet, daß der Entzerrer eine Korrekturvorrichtung enthält, die aus einem analogen Subtrahierglied besteht, welches das Symbolkorrektursignal von einem Digital-Analog-Wandler (11) empfängt, der am Ausgang des einen Pufferspeicher (13) für binäre Transkodierungen und eine aus logischen binären Toren (47, 50) gebildete Korrekturlogik (12) enthaltenden Filters (10) liegt, wodurch die Transkodierbits aus dem Pufferspeicher für i aufeinanderfolgende Symbole des Empfangssignals mit i·q Bits entsprechend i Anpassungskoeffizienten verknüpft werden, die voneinander ausgehend von einem ursprünglichen Koeffizienten in einer Aktualisierungsvorrichtung (16) abhängig von einem Ergebnis einer Fehlerfeststellung erhalten werden, die in binärer Form für jedes aufeinanderfolgende Symbol durch die Quantifiziervorrichtung geliefert wird.

2. Selbstanpassender digitaler Entzerrer nach Anspruch 1, dadurch gekennzeichnet, daß der Pufferspeicher (13) mindestens zwei parallele Untereinheiten von Kippstufen (3) in Reihe enthält, um in einer Untereinheit i für den Absolutwert der Amplitude der Symbole des empfangenen Signals charakteristische Bits zu speichern, die von der Quantifiziervorrichtung (18) für i aufeinanderfolgende Taktperioden CK erhalten werden, während die andere Untereinheit i für das Vorzeichen charakteristische Bits speichert, die gleichzeitig von der Quantifiziervorrichtung für die gleichen Symbole geliefert werden.

3. Selbstanpassender digitaler Entzerrer nach Anspruch 2, dadurch gekennzeichnet, daß der Ausgang jeder der i Kippstufen (3) jeder Untereinheit des Pufferspeichers (13) mit einem Eingang eines Multiplexers (45 oder 51) verbunden ist, der dieser Untereinheit zugeordnet ist und von einem beiden Multiplexern gemeinsamen Zähler (46) gesteuert wird, der gleichzeitig die Ausgänge der Kippstufen gleichen Rangs in den beiden Untereinheiten mit der Frequenz iCK entsprechend einem i-fachen der Frequenz CK des Empfangssignals aktiviert.

4. Selbstanpassender digitaler Entzerrer nach Anspruch 2, dadurch gekennzeichnet, daß die Korrekturlogik (12) mindestens einen logischen Modul (14) enthält, der zum einen ein Exklusiv-ODER-Tor (50) enthält, welches mit einem ersten Eingang an einen Ausgang der Untereinheit, die die Vorzeichenbits speichert, und mit einem zweiten Eingang an einen Vorzeichenbitausgang der Aktualisierungsvorrichtung (16) angeschlossen ist, und der zum anderen q-1 UND-Tore (47) enthält, die gemeinsam über einen Eingang an einen Ausgang der die Amplitudenbits speichernden Untereinheit und einzeln an q-1 Ausgänge für Koeffizientenbits der Aktualisierungsvorrichtung angeschlossen sind, die gleichzeitig q Bits je Koeffizient liefert, wobei alle diese Tore (47, 50) parallel an den Wandler (11) über ein Summierglied (15) führen, um ein Symbolkorrektursignal an die Subtrahiervorrichtung (17) bei jeder Taktperiode CK zu liefern.

5. Selbstanpassender digitaler Entzerrer nach Anspruch 3 und 4, dadurch gekennzeichnet, daß die Korrekturlogik (12) einen einzigen logischen Modul (14) aufweist, der zum einen aus einem Exklusiv-ODER-Tor (50), das mit einem ersten Eingang an einen Ausgang des ersten Multiplexers (45), der mit der das Vorzeichenbit speichernden Untereinheit verbunden ist, und mit einem zweiten Eingang an einen Vorzeichenbitausgang der Aktualisierungsvorrichtung (16) angeschlossen ist, und zum anderen aus q-1 UND-Toren (47) besteht, die gemeinsam über einen Eingang an den Ausgang des ersten Multiplexers (45), der mit der die Amplitudenbits speichernden Untereinheit verbunden ist, und einzeln an q-1 Koeffizientenbitausgänge der Aktualisierungsvorrichtung angeschlossen sind, die zugleich q Bits je Koeffizient liefert, wobei alle diese Tore (47, 50) parallel zum Wandler (11) über ein Summierglied (15) führen, um ein Symbolkorrektursignal an die Subtrahiervorrichtung (17) bei jeder Taktperiode CK zu liefern, wobei eine Addierschaltung (52) des Summierglieds (15) die q gleichzeitig von den Toren (47, 50) gelieferten Bits mit den Kombinationen von q Bits kombiniert, die vorher von diesen gleichen Toren während i aufeinanderfolgenden Zyklen für jedes Symbolkorrektursignal geliefert wurden, wobei zwei Verriegelungsregister (53, 54), deren Lesesteuerung im Rhythmus eines Takts der Frequenz i·CK bzw. der Frequenz CK erfolgt, zwischen die q Ausgänge der Addierschaltung und einerseits q andere Eingänge dieser Schaltung für das erste Register (53) und andererseits die q Eingänge des Wandlers (11) für das zweite Register (54) eingefügt sind.

6. Selbstanpassender digitaler Entzerrer nach Anspruch 5, dadurch gekennzeichnet, daß die Aktualisierungsvorrichtung (16) ein Register (48) vom FIFO-Typ mit i Stufen und q parallelen Ausgängen besitzt, die einerseits mit den Eingängen des logischen Moduls (14) der Korrekturlogik und andererseits mit einer Gruppe von Eingängen eines Summierglieds (57) verbunden sind, das an einer anderen Gruppe von Eingängen q Koeffizientenbits empfängt, die von einem logischen Modul (59) identisch dem logischen Modul (14) der Korrekturlogik geliefert wurden, wobei dieser logische Modul (59) die q Bits der Definition eines ursprünglichen Koeffizienten über q-1 UND-Tore (55) und ein Exklusiv-ODER-Tor (58) empfängt und wobei letzteres weiter an den Ausgang eines anderen Tors (56) des gleichen Typs angeschlossen ist, das einerseits das Vorzeichenbit von der Quantifiziervorrichtung (18) für jede ausgehend von einem ankommenden Symbol durchgeführte Transkodierung und andererseits das Vorzeichenbit empfängt, das vom zweiten Multiplexer (51) mit jedem Takt iCK geliefert wird, wobei der erste Multiplexer (45) gleichzeitig mit jedem Takt iCK ein Amplitudenbit an die q-1 UND-Tore liefert.

**Claims**

1. Digital adaptive equaliser for correcting distortion of a digital signal by a transmission line (2) on which the signal is transmitted in a code of at least three levels at the timing rate of a clock of frequency "CK", said equaliser being connected to the link output by a corrector device (17) receiving the transmitted signal and a correction signal from a filter (10), the output signal of the corrector device being transcoded in binary by a quantiser device (18) before it is processed by the filter, which allows for binary transcodings effected for "i" successive symbols of the signal received at the timing rate "CK" to establish, according to at least one initial adapter coefficient, the correction signal to be applied to the symbol incoming via the link, said equaliser being characterised in that it includes a corrector device comprising an analogue subtractor receiving the symbol correction signal from a digital/analogue converter (11) connected to the output of the filter (10) which includes a buffer memory (13) for binary transcodings and correction logic (12) comprising binary logic gates (47, 50) associating the transcoding bits contained in the buffer memory for "i" successive symbols of the signal received with "i·q" bits corresponding to "i" adapter coefficients obtained one from the other, from an initial coefficient, by an update device (16) according to an error result supplied in binary form for each successive symbol by the quantiser device.

2. Digital adaptive equaliser according to claim 1 characterised in that the buffer memory (13) includes at least two parallel subsets of bistables (3) in series to store in a subset "i" bits characteristic of the absolute value of the amplitude of the symbols of the signals received which are obtained from the quantiser device (18) for "i" successive clock periods "CK", while the other subset memorises "i" bits characteristic of the sign simultaneously supplied by the quantiser device for the same symbols.

3. Digital adaptive equaliser according to claim 2 characterised in that the output of each of the "i" bistables (3) of each subset of the buffer memory (13) is connected to an input of a multiplexer (45 or 51) assigned to this subset and controlled by a counter (46) common to the two multiplexers which simultaneously activate the outputs of bistables of the same numerical position in both subsets at the frequency "iCK" corresponding to the multiple "i" of the frequency "CK" of the received signal.

4. Digital adaptive equaliser according to claim 2 characterised in that the correction logic (12) includes at least one logic module (14) comprising an exclusive-OR gate (50) having a first input connected to an output of the subset memorising the sign bits and a second input connected to a sign bit output of the update device (16) and also to "q-1" AND gates (47) having one input connected together to an output of the subset memorising the amplitude bits and individually to "q-1" coefficient bit outputs of the update device which simultaneously supply "q" bits per coefficient, all these gates (47, 50) driving the converter (11) in parallel via an adder (15) to produce a symbol correction signal which is passed to the subtractor device (17) at each clock period of clock "CK".

5. Digital adaptive equaliser according to claims 3 and 4 characterised in that the corrector logic (12) includes a single logic module (14) comprising an exclusive-OR gate (50) having a first input connected to an output of the first multiplexer (45) connected to the subset memorising the sign bit and a second input connected to a sign bit output of the output device (16) and "q-1" AND gates (47) having one input connected together to the output of the first multiplexer (45) connected to the subset memorising the amplitude bits and individually to "q-1" coefficient bit outputs of the update device which simultaneously supply "q" bits per coefficient, all the gates (47, 50) driving in parallel the converter (11) via an adder (15) to supply a symbol correction signal to the subtractor device (17) on each period of clock "CK", an adder circuit (52) of the adder (15) combining the "q" bits simultaneously supplied by the gates (47, 50) with the combinations of "q" bits previously supplied by the same gates during "i" successive cycles for each symbol correction signal, two latching registers (53, 54) respectively read at the timing rate of a clock at frequency "iCK" and the clock at frequency "CK" being inserted between the "q" outputs of the adder circuit and "q" other inputs of this circuit in the case of the first register (53) or the "q" inputs of the converter (11) in the case of the second register (54).

6.  Digital adaptive equaliser according to claim 5 characterised in that the update device (16) includes a first in/first out register (48) with "i" stages and "q" parallel outputs connected to the inputs of the logic module (14) of the corrector logic and to a group of inputs of an adder (57) receiving at another group of inputs "q" coefficient bits supplied by a logic module (59) which is identical to the logic module (14) of the corrector logic and which receives the "q" bits defining an initial coefficient on "q-1" AND gates (55) and on an exclusive-OR gate (58), the latter being also connected to the output of another exclusive-OR gate (56) which receives the sign bit supplied by the quantiser device (18) for each transcoding applied to an incoming symbol and the sign bit supplied by the second multiplexer (51) at each clock time of clock "iCK", the first multiplexer (45) simultaneously supplying an amplitude bit to the "q-1" AND gates at each clock time of clock "iCK".

# FIG. 1

# FIG. 2

# FIG. 3